(19) Europäisches Patentamt European Patent Office Office européen des brevets

(11) **EP 4 734 435 A1**

(12) **EUROPEAN PATENT APPLICATION**

(43) Date of publication:
**29.04.2026 Bulletin 2026/18**

(21) Application number: **24306773.3**

(22) Date of filing: **22.10.2024**

(51) International Patent Classification (IPC):
**H04L 9/08** (2006.01)    **H04B 10/00** (2013.01)

(52) Cooperative Patent Classification (CPC):
**H04L 9/0858; H04B 10/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Institut Mines Telecom**
**91120 Palaiseau (FR)**

(72) Inventors:
• **ALLEAUME, Romain**
  **75014 PARIS (FR)**
• **JAOUËN, Yves**
  **75019 PARIS (FR)**
• **RICARD, Guillaume**
  **91190 GIF-SUR-YVETTE (FR)**

(74) Representative: **Atout PI Laplace**
**Immeuble Up On**
**25 Boulevard Romain Rolland**
**CS 40072**
**75685 Paris Cedex 14 (FR)**

(54) **REFINED NOISE ESTIMATION IN CONTINUOUS-VARIABLE QUANTUM COMMUNICATION**

(57) Method of channel noise estimation for a continuous variable quantum communication channel, the method comprising in a receiver device (400) receiving a signal through a public transmission media (200) and processing a recovered quantum signal using channel parameter estimation (Eq6), evaluating an amount of excess noise. A controlled amplitude modulation (401) is performed in the receiver device (400), to form said recovered quantum signal from the signal received through the public transmission media (200) by the receiver device (400), the method comprising evaluating, using the controlled amplitude modulation (401) a subamount of said amount of excess noise dependent from the channel (QC).

Fig. 3

**Description**

**Technical context**

The invention relates to the field of communications using quantum cryptography, i.e. cryptographic technics exploiting quantum mechanical properties. The invention relates more particularly to systems and methods of securely communicating between parties using quantum technics. In particular, a transmitted message can be a cryptographic key.

In Quantum Key Distribution, generally speaking a cryptographic key is distributed by a transmitter and then shared between two ends, called Alice, the transmitter, and Bob, the receiver, having distinct premises. The key is used by the two ends to then perform secured communications.

Quantum Key Distribution (QKD) allows securely distributing a key over a public channel, even though it is public. It consists in encoding information into quantum signals that are exchanged between two parties connected by a channel called quantum channel. This quantum channel can be supplemented by one pre-existent authenticated channel conveying classical information.

QKD is generally not compatible with optical amplifiers because of the principle of quantum mechanics according to which the process of measuring a quantum system disturbs the system, which is also the reason why a third party trying to eavesdrop on the key introduces detectable anomalies, which brings security to the quantum channel, even if it is public.

The quantum key can be distributed over optical fibers or other media, including free space. The distribution is performed with integrated photonics implementations of transmitters and receivers and based on transmitting non-orthogonal quantum states.

The associated security analysis is founded by the assumption that the noise in excess is due to an eavesdropper.

QKD is typically associated with the one-time pad encryption technique because it provides a way of distributing a long shared secret key securely and efficiently. The one-time pad, with keys distributed via QKD, is a secure encryption scheme. It offers eternal security, and is not dependent on hypothesis on the attacker.

QKD can use single photons acting as information carrier and is thus in that case called discrete-variable -DV-QKD. In DV QKD, the quantum state is the degree of liberty of single photon. The source is a single photon source. The detector is a single photon detector. There is no spectral selectivity, and thus Raman noise caused by any supplementing parallel classical channel induces losses in the quantum signal, and the associated power is thus voluntarily kept very low. The cost of implementation is high.

But the invention uses in an embodiment a further QKD strategy known as Continuous Variable Quantum Key Distribution or CV-QKD. In CV-QKD, a parallel classical channel can be of significant power level.

In CV-QKD, the quantum state is the quadrature of electromagnetic field. Wavelength division multiplexing (WDM) (equivalent to frequency division multiplexing FDM) or time-division multiplexing (TDM) can be used to multiplex a classical channel and the quantum channel. The source is a standard laser source. The detector uses coherent detection (ie measures amplitude and phase of an electromagnetic signal). The spectral selectivity is the detector bandwidth. Key rate, also named secret key rate, i.e. the fraction of input signals that makes it into the key, or the number of secret bits per symbols sent, can be high. The cost of implementation is low. CV-QKD uses encoding of squeezed or coherent states. CV-QKD uses coherent receivers as opposed to the single-photon counters used in DV-QKD. CV-QKD with coherent states and coherent detection integrates well with existing telecommunication networks. One CV-QKD protocol is the Gaussian-modulated coherent state (GMCS) protocol.

CV-QKD can be used for military, diplomatic and industrial purposes. It allows the long term securing of sensitive data such as personal, medical or genomic data. CV-QKD enables metropolitan deployment because of its cost-effectiveness, compatibility with existing hardware and coexistence alongside classical optical communications.

CV-QKD requires a local oscillator to perform coherent detection and thus measure the quantum signals. The local oscillator is a strong laser signal and can be transmitted to the receiver over the quantum channel, in a strategy called TLO for transmitted local oscillator.

In more recent local local oscillator, or LLO, methods, also names "true local oscillator" a local oscillator is generated at the receiver premises, hence the "local local" terminology. It is implemented with phase compensation at the receiver.

For example such a LLO protocol has been introduced by Soh et al., 2015, Self-Referenced Continuous-Variable Quantum Key Distribution Protocol, Phys. Rev. X 5, 041010. Each signal pulse is accompanied by a reference pulse or a pair of reference pulses, used to perform phase compensation. In Marie et Alléaume, 2017, Self-coherent phase reference sharing for continuous-variable quantum key distribution, Phys. Rev. A 95, 012316 distinguishes the LLO-sequential method with sequentially (temporally) multiplexed quantum signal optical pulses and phase reference pilot tones optical pulses and LLO-displacement, where the phase reference information is encoded in the displacement of the standard CV-QKD Gaussian modulated coherent state protocol. Laudenbach et al. "Pilot-assisted intradyne reception for high-speed continuous-variable quantum key distribution with true local oscillator", Quantum 3, 193, 2019, multiplexed a reference tone to the quantum signal.

In WO2023151927A1, Aymeric et al., "Symbiotic joint operation of quantum and classical coherent communications" in Optical Fiber Communication Conference (OFC) 2022, paper W2A.37 and Aymeric et al. "Quantum key distribution and classical communication coherent deployment with shared hardware and joint digital signal processing", Proceedings Volume 12133, Quantum Technologies 2022, a further LLO setup is presented. It features joint classical and quantum optical communications with modulation of a carrier to provide an optical signal comprising quantum and classical signals. An extraction is performed using the extracted classical signal with compensation in the quantum extracted signal of frequency and phase mismatches. This approach increases quantum communications pervasiveness by minimizing the resources necessary to deploy them and by pushing further the conditions under which QKD and classical communications can coexist over the same fiber.

Current CV-QKD systems are limited, because excess noise compromises performance and restricts achievable transmission distance. Most CV-QKD implementations only consider electronic noise trusted.

A substantial portion of excess noise indeed originates from the receiver's electronics. This noise is calibrated and may be treated as trusted. This approach, justified by the restricted adversary access to the receiver's premises, enables significantly long-distance CV-QKD transmission. CV-QKD is performed over 100-km optical fiber with local local oscillator as shown in Hajomer et al. Sci. Adv. 10, 2024. CV-QKD is also performed based on probabilistically shaped 64 and 256 QAM in Roumestan et al. 2021 European Conference on Optical Communication (ECOC), Bordeaux, France, 2021, pp. 1-4. CV-QKD is done with on-chip light sources based on photonic chips, in Li et al. Photonics Research Vol. 11, No. 4, 2023, 504.

A major part of the total excess noise in a typical CV-QKD setup is from the equilibrated coherent detectors. The Raman noise, the phase-recovery noise, the quantisation noise caused by the analog-to-digital converter, the modulation noise, the relative intensity noise of transmitter laser and local oscillator and the noise caused by the common-mode-rejection ratio are in general less intense.

The excess noise typically amounts for a fraction of the shot noise.

As a reminder, shot noise arise from quantum fluctuations of vacuum and is thus a purely quantum noise. Contrary to the electronic noise, that can be controlled and reduced, shot noise cannot be reduced nor manipulated. The shot noise is carefully calibrated and other noises variances are expressed in shot noise units (SNU).

Quantifying the excess noise is necessary for secure-key generation. Brunner et al. "Precise Noise Calibration for CV-QKD", in 2020 22nd International Conference on Transparent Optical Networks, ISSN: 2161-2064, Jul. 2020, pp. 1-4 discloses using a precise technique for excess noise calibration strategy, relying on long-time averages.

The hypothesis that the local noise can be trusted allows overcoming a limitation of the performances of CV-QKD. Yet, the hypothesis that local noise can be trusted is in general not fully exploited in real CV-QKD implementation, since local and channel noise cannot be discriminated.

Modulating amplitude or intensity at Bob's end has been previously mentioned as a way to counter side-channel attacks - as in Lucamarini et al., "Implementation security of quantum cryptography introduction, challenges, solutions - ETSI white paper no. 27", 2018.

One crucial part of classical post-processing is parameter estimation, a routine aiming at obtaining information about the quantum channel connecting Alice to Bob. It implies for Alice revealing a fraction of her data on the public authenticated channel.

## The invention and its advantages

The invention aims in particular at enhancing performance and the maximum distance reachable with a positive secret key rate using CV-QKD, including with cost-effective hardware.

The invention offers a solution to the limitation of the performance of CV-QKD due to the noise generated by the receptor device.

In order to overcome the problem of the prior art, the invention is a method of channel noise estimation for a continuous variable quantum communication channel, the method comprising in a receiver device receiving a signal through a public transmission media and processing a recovered quantum signal using channel parameter estimation, evaluating an amount of excess noise.

In an original manner, a controlled amplitude modulation is performed in the receiver device, to form said recovered quantum signal from the signal received through the public transmission media by the receiver device, the method comprising evaluating, using the controlled amplitude modulation a subamount of the amount of excess noise dependent from the channel.

The invention allows considering the complementary subamount of excess noise, that is essentially independent from the channel, as trusted for any cryptographic or security purpose.

In an example, the method comprises evaluating, using the controlled amplitude modulation, a subamount of the amount of excess noise independent from the channel, and determining a secret key rate with considering said subamount of excess noise independent from the channel as trusted.

In the invention, local noise contributions at reception are considered trusted, owing to the receiver's environment being inaccessible to adversaries.

The invention involves a step of modulating the received signal. It involves integrating an amplitude modulator at the receiver's end to differentiate between various noise components observed at reception and to estimate all components of the local noise, not only the electronic noise. The invention allows eventually treating the entire local noise at reception as trusted.

The invention includes a robust procedure for accurately estimating the full local component of the excess noise.

Channel parameter estimation is refined. The trusted noise model is extended. The invention allows estimating and separating in the excess noise the receiving device local contribution and the contribution from the non-secured channel. This leads to significant improvements in transmission distance and secret key rate, when QKD is performed. The invention is a significant step forward, offering practical solutions to enhance security and enable long-distance quantum communication.

The invention has implications in quantum communications, quantum networks, and cybersecurity.

In QKD, both the transmission distance and the secret key rate are increased.

The invention can be used with virtually any prepare and measure CV-QKD device. It allows reaching greater distances for CV-QKD secret key exchange than those obtained with the prior art. It also allows accepting a receiving device with a higher level of noise, and this is likely to help reducing costs of the devices used.

The invention allows for example, reaching a transmission distance of 25km with a secret key rate of 0,37 Mbps using standard material, in noise conditions where no secret key rate would be obtainable using a standard noise estimation procedure.

Advantageous and optional features of the invention are now listed.

- the communication channel may be used to communicate securely between a distant parties or to perform secure multi-party computations.
- the continuous variable communication may be an optical communication. The amplitude modulation may use an acousto-optic or optoelectronic effect in a modulator adapted to the transmission media. In particular, the amplitude modulation can be done with an acousto-optic modulator or an electro-optic modulator.
- the amplitude modulation may be rely on two amplitude levels with a precalibrated ratio between the two levels or with three amplitude levels with precalibrated ratios between levels, or more generally a multilevel modulation, with different amplitude levels. In particular, the amplitude modulation can be a square modulation with two amplitude levels with a precalibrated ratio between the two levels.
- evaluating a subamount can include isolating symbols from a constellation by conditioning on a symbol sent by a transmitter in the channel.
- said processing a recovered quantum signal can include at least correcting a phase or a frequency offset or applying a filter using information obtained from a processing of a signal of higher intensity than the quantum signal and recovered in the receiver device from the transmission media in a synchronized manner.
- the signal of higher intensity can include a pilot tone or a data communication channel and, if so, said processing a recovered quantum signal includes demultiplexing said recovered quantum signal and said signal of higher intensity using wavelength or time division.
- said processing a recovered quantum signal can include demodulating using for example a discrete modulation scheme. 16-PSK, 32-PSK, 64-PSK or 16-QAM, 32-QAM, 64-QAM, 256-QAM or a Gaussian modulation may be used for transmitting the quantum data.
- said processing a recovered quantum signal can include demodulating a light with a dual polarization 90° hybrid demodulator, said demodulating a light being performed with the light from a laser (420) of the receiver device locally producing a local oscillator or with the light from a laser transmitted through the public transmission media.
- said processing a recovered quantum signal can include measuring with at least one coherent detector at least a quadrature of a light, on at least one polarization.

The invention can be recognized by the amplitude modulator of the receiving device. This modulator is used to assess the local noise. The digital signal processing is also typical together with the channel parameters estimation step.

**List of figures**

Figure 1 is a scheme of the technical context of the disclosure.

Figure 2 shows a block diagram of the transmitter in an embodiment of the invention, and the optical spectrum of the modulated light in the transmitter.

Figure 3 shows a block diagram of the receiver in an embodiment of the invention, and the time evolution of an amplitude modulation used at the receiver.

Figure 4 shows a block diagram of the joint digital signal processing routine in the receiver according to an embodiment.

Figure 5 shows results obtained with the invention regarding the classical signal recovered at the receiver.

Figure 6 shows further results obtained with the invention regarding the quantum signal recovered at the receiver.

Figure 7 also shows a key advantage of the invention.

Figure 8 shows further results obtained with the invention - namely the excess noise components estimates, with a 25 km channel.

Figure 9 shows further results obtained with the invention - namely the secret key rate with respect to channel length.

## Description in relation with the figures

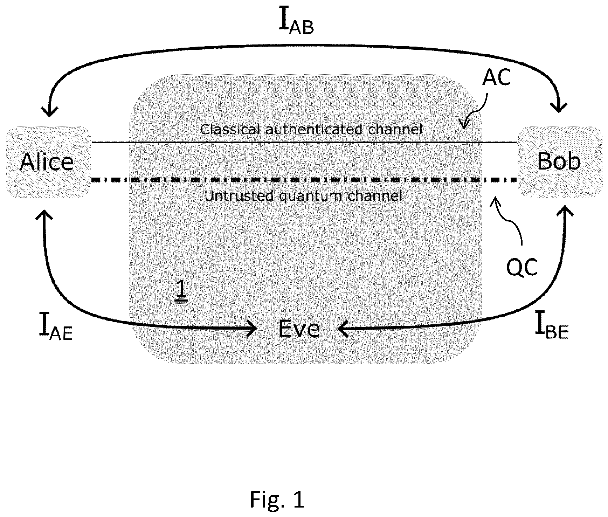

[Fig. 1] In the invention, as shown on figure 1, transmission is performed from Alice, in Alice's premises to Bob, in Bob's premises. Bob and Alice's premises are distant from each other. The transmission is performed within a transmission media 1, that can be an optical transmission media such as optical fiber, or in some cases, free space. This media can be public.

The transmission involves an authenticated classical channel AC, and a quantum channel QC, that is not authenticated and hence described as untrusted - eavesdropping on the quantum channel QC being conceivable for lack of authentication. An eavesdropper Eve (an attacker or adverse party) is expected to try to take knowledge of the content of the transmission on the quantum channel QC. Alice and Bob try to exchange a quantum key in order to later encrypt and decrypt further messages, in absolute security.

The secret key rate SKR is the minimum key rate calculated by Alice and Bob by determining their shared information rate ($I_{AB}$ on figure 1), minored by taking into account the maximum rate of information intercepted by Eve ($I_{BE}$ and $I_{AE}$ on figure 1).

A positive secret key rate SKR is obtained in CV-QKD setups according to the invention.

In embodiments of the invention, a post-processing is further performed at Bob's premises and includes a step of information reconciliation using the authenticated classical channel AC.

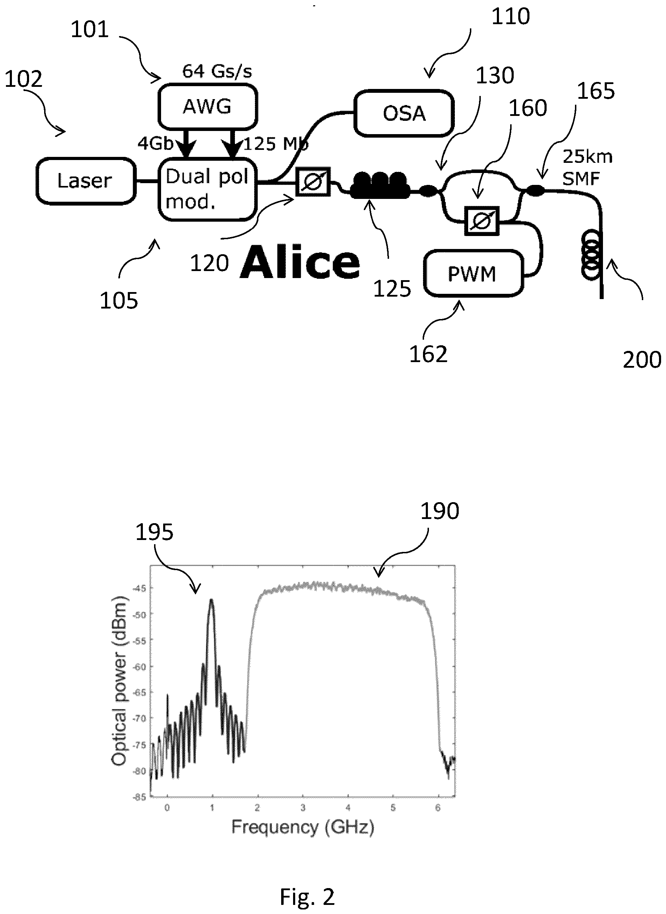

[Fig. 2] A non-limiting embodiment of coherent optical communication system for CV-QKD according to the invention is presented. Figure 2 shows the devices used at Alice's premises.

Classical and quantum channels are produced as separated RF signals by an arbitrary waveform generator (AWD) 101.

The classical signal is generated, in an embodiment, as a Quadrature Phase Shift Keying (QPSK) signal at 4 Gb, pulse-shaped using a Root Raised Cosine filter with a roll-off of 0,1, facilitating sharp frequency cutoff and minimizing leakage across quantum signal frequencies. Such filtering is not needed on the quantum signal however.

Meanwhile, the quantum signal is modulated, in an embodiment, as a 64 states Quadrature Amplitude Modulation (64-QAM) at 125 Mb with Probabilistic Constellation Shaping.

In alternative embodiments, other discrete modulation formats are used.

For example, the electrical signals may be both Quadrature Phase Shift Keying (QPSK) signals.

16-PSK, 32-PSK, 64-PSK or 16-QAM, 32-QAM, 64-QAM, 256-QAM are used in certain embodiments. Preferably, QAM is used for transmitting the quantum data. Using higher order modulation schemes enhances the security of quantum data. QPSK is well suited to obtain the phase of the received classical signal.

In still further embodiments, Gaussian modulation is used for the quantum signal.

In still a further embodiment, le classical signal is a pilot tone, modulated with a cosine function - and conveys no data.

A 100 Hz linewidth laser 102 at telecom wavelength is concomitantly used to produce a coherent light. The laser light is then modulated with the RF signals produced by the arbitrary waveform generator 101 by a dual-polarization IQ modulator 105 using Wavelength Division Multiplexing. Classical and quantum channels are also modulated on orthogonal polarization states by the dual-polarization IQ modulator 105.

This system can jointly perform classical communication (with information in the classical channel) and shot noise-limited quantum communication. However, the classical channel may not carry any information, except an implicit phase reference.

As shown on the spectrum in the lower part of figure 2 (showing, on the x axis, the frequency from 0 to 10 GHz and on the y axis, optical power in dBm from -85 to -45), the classical channel 190 is digitally shifted from the carrier by 4 GHz, and the quantum channel 195 is shifted from the carrier by 1 GHz. This is checked on an optical spectrum analyser 110 that allows visualizing the spectrum of the light transmitted by the dual polarization IQ modulator 105.

The digitizing rate of the arbitrary waveform generator 101 is in an embodiment 64 gigasamples per second (Gs/s).

This light exiting the dual polarization IQ modulator 105 is processed by a variable optical attenuator 120 to control its intensity and then by a polarization controller 125 to control its polarization.

The quantum signal is then separated from the classical signal by a polarising beam splitter 130 (PBS).

The quantum signal is then selectively attenuated by a variable optical attenuator 160 receiving a controlling signal from a pulse-width modulator 162, in order to set the modulation variance $V_A$ of the quantum signal to the desired value. The modulation variance on Alice's side, $V_A$ is a free parameter of the protocol. It is proportional to the mean number of photon per symbol for a discrete modulation scheme.

After being recombined, at polarizing beam combiner 165 (PBC), both optical coherent communications channels (classical and quantum) are outputted over a fiber 200 of the SMF type (single mode optical fiber). It is advantageous that the same fiber is used for the two channels, and their signals have indeed been multiplexed (time division multiplexing is used in an alternative embodiment, instead of wavelength division multiplexing).

The fiber 200 is a part of the transmission media 1, and in embodiments, the fibe 200 is the whole transmission media 1.

Both classical and quantum signals travel through the same 25 km single mode fiber link before reaching the premises of the receiver Bob. The local oscillator from laser 102 is not transmitted on the fiber (LLO setup).

The system works, in an embodiment, with receiver's end locally generated local oscillator (LLO). Thus the local oscillator tone from the laser 102 is not transmitted on the fiber 200. But in an alternative embodiment (not shown), a TLO setup is used. In this alternative embodiment, the local oscillator from laser 102 is transmitted through the fiber 200 to the receiver's side.

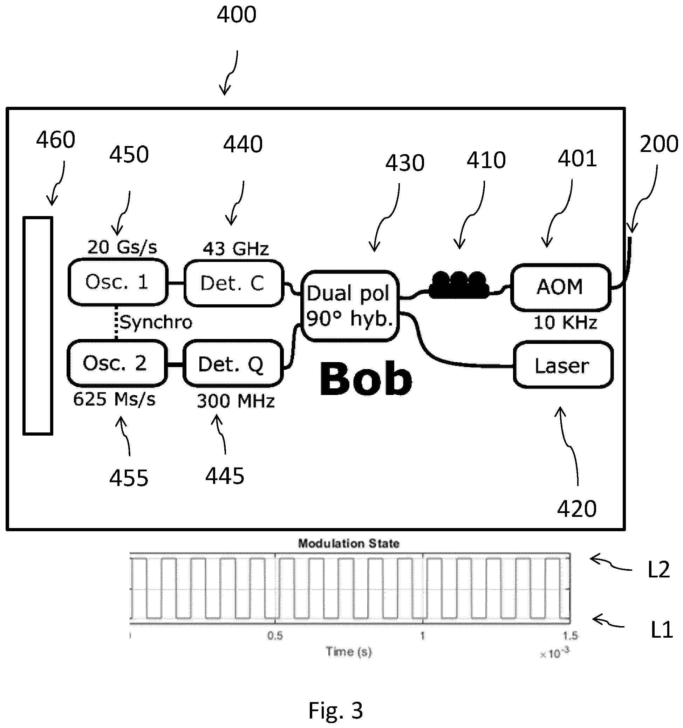

[Fig. 3] Figure 3 shows the devices used at Bob's premises and forming a receiver device 400, not accessible to an attacker or eavesdroper. Just after the channel, after the end of the fiber 200, the light encounters an acousto-optic modulator AOM 401 driven by, in an example, a 10 kHz square analog electrical signal. The frequency is generally chosen to be high enough with regard to the speed of variation of the signal outputted by the channel.

The lower part of figure 3 shows a temporal plot with, on the y-axis, the modulation state from a first modulation level (named level L1) to a second modulation level (named L2). The modulation state moves up and down in a periodic square function manner, defining several (ie the described embodiment 2) attenuation or transmission levels. On the x-axis the time is shown from 0 to 1,5 ms, as an illustration.

This acousto-optic modulator 401 and this square function allows performing CV-QKD acquisitions at different total transmission levels, hence allowing a more refined channel parameter estimation procedure in the controller of the receiver.

In an alternative embodiment, the acousto-optic modulator AOM 401 is replaced by an electro-optic modulator acting as an amplitude modulator by using a Mach-Zehnder interferometer.

Then, after amplitude modulation by the acousto-optic modulator AOM 401 or another modulator, the light has its polarization controlled by a polarisation controller 410 and then enters a dual polarization 90° hybrid demodulator 430 along with the light from the receiver laser 420 locally producing a local oscillator LO, and the optical frequency of which is tuned to detect the quantum signal in baseband.

In various non-limiting embodiments, the receiver laser is a distributed-feedback (DFB) laser or a laser diode, or an external cavity laser (ECL). It is of the same type of a different type of the laser 102 used in the transmitter.

Coherent detectors 440 and 445 measure both quadratures of the resulting optical signals, on both polarizations. Coherent detector 440 is a 43 GHZ high-speed photodetector and measures the classical signal. Coherent detector 445 is a 300 MHz photodetector and measures the quantum signal.

The signals are, in an embodiment, digitally sampled using two distinct oscilloscopes 450 and 455 that share the same clock reference and trigger (as shown by dashed lines on the figure) for accurate time synchronisation. The digitizing rate of the oscilloscope 450 for the classical date is for example 20 gigasamples per second (Gs/s). The digitizing rate of the oscilloscope 455 for the quantum date can be 625 megasamples per second (Ms/s).

The balanced photoreceivers used for quantum signal detection in the coherent detector 445 exhibit a 13 dB clearance over a 350 MHz bandwidth. The losses induced within the detection apparatus consist in the efficiency of detectors 440 and 445 (-0,5 dB), losses in the hybrid demodulator 430 (-2 dB), and losses in the acousto-optic modulator 401 (-3 dB). Those induced by the 25 km single mode fiber 200 are -5 dB.

Shot noise calibration is made, in a non-limiting embodiment, by cutting incoming light with LO still on. This can be done periodically, and in an embodiment, before each acquisition of a block of, for example, $1,8.10^5$ symbols.

The carrier phase is then recovered using the classical communication channel.

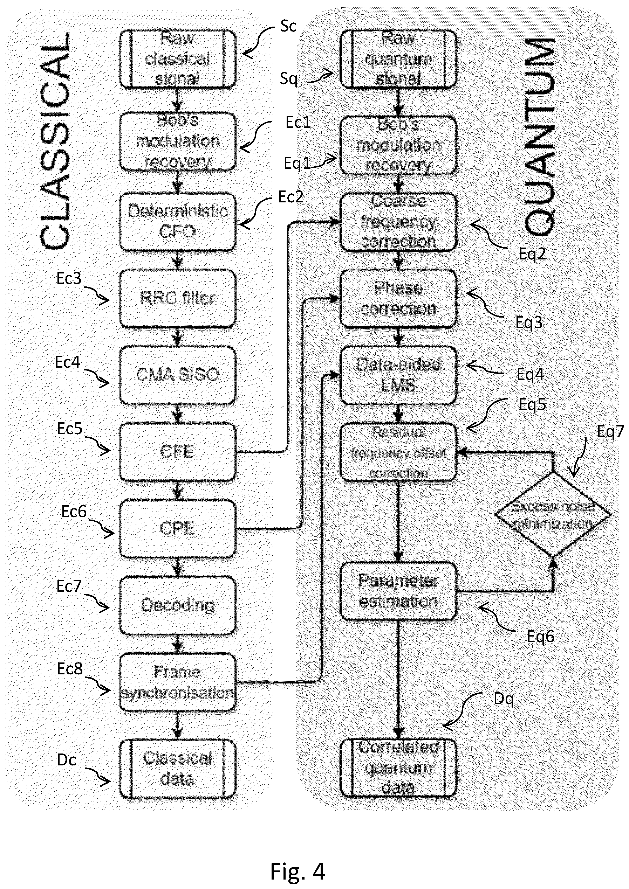

More precisely, a joint digital signal processing (DSP) 460 is used to leverage the high signal-to-noise ratio (SNR) estimates from classical signals to precisely correct in frequency and phase the quantum signals. The joint classical processing 460 is described in more details in relation to figure 4.

[Fig. 4] Upon reception, the classical signal undergoes a series of processing steps for joint digital signal processing as shown on the left part of figure 4.

The raw classical signal Sc is treated in the following manner. This signal Sc is processed in a modulation recovery step Ec1 as explained in relation to figure 3. Then a deterministic carrier frequency offset (CFO) correction or compensation step Ec2 is performed. It is followed by the root raised cosine (RRC) filter step Ec3. Then a constant modulus algorithm (CMA) based adaptive equalization operated in Single Input Single Output (SISO) is applied in a step Ec4. Advantageously, a two-convergence radius (to account for Bob's amplitude modulation by the acousto-optic modulator 401) version of the Constant Modulus Algorithm is used. It is followed by a carrier frequency estimation (CFE) step Ec5 and a carrier phase estimation (CPE) step Ec6. A step Ec7 of decoding the data of the classical channel from the processed classical signal is then performed, followed by a frame synchronisation step Ec8, and this lead to recovered classical data Dc.

Errors on the classical transmission are virtually non-existent.

The raw quantum signal Sq is obtained and then used in the following manner. This signal Sq is processed in a modulation recovery step Eq1 as explained in relation to figure 3. Then a coarse frequency correction step Eq2 is performed. It uses frequency shift information derived from the classical signal and determined in the carrier frequency estimation (CFE) step Ec5. Then a phase correction step Eq3 is performed. It uses phase shift information derived from the classical signal and determined in the carrier phase estimation (CPE) step Ec6.

Subsequently, a data-aided least mean squares (LMS) algorithm is employed, and it uses synchronisation information from the classical data determined in the frame synchronisation step Ec8, in an optimization process to optimize a Finite Impulse Response filter (FIR), including choosing the optimal symbol. This filter is applied on the signal to account for imperfections and optimally downsample the QKD signal to a 1 sample per symbol regime in a filtering step Eq4.

Remaining frequency offset, if any, is then corrected during channel parameter estimation by iteratively minimizing excess noise, in a loop composed of

- a step of residual frequency offset correction Eq5
- Eq5 being followed by a step of channel parameter estimation Eq6, and step Eq6 is followed by a test
- Conditional to the result of the test, channel parameter estimation step Eq6 is followed by an excess noise minimisation step Eq7,
- The excess noise minimisation step Eq7 is followed by a new iteration of the residual frequency offset correction step Eq5, starting a new instance of the loop traversal.
- Conditional to the result of the test mentioned earlier (at the end of step Eq6), the loop is exited and the correlated quantum data Dq is obtained.

In alternative embodiment, beside the step of residual frequency offset correction Eq5, other corrections are made in a loop involving channel parameter estimation Eq6, such as phase correction. An adapted test is performed when needed to decide if the loop has to be exited.

The step of channel parameter estimation Eq6 is discussed in the following.

A refined method to perform channel parameter estimation in CV-QKD is used in an embodiment. This method leverages the acousto-optic modulator AOM 401 placed at Bob's side and used to modulate the amplitude using a square signal as shown on figure 3. The square signal defines two levels of amplitude. More than two levels can be used in alternative embodiments.

Four steps are used for the noise calibration when two levels are used for the amplitude modulation.

These four steps are

- first the local oscillator laser is off, and the signal is off. This allows calibrating the electronic noise.

- then the local oscillator laser is on, and the signal is off. This allows calibrating the shot noise.

- then the local oscillator laser is on, the signal is on, and the first level of attenuation at the receiver $\eta_1$ is applied. This allows calibrating a first time the excess noise.

- then the local oscillator laser is on, the signal is on, the second level of attenuation $\eta_2$ is applied at the receiver. This allows calibrating a second time the excess noise.

From comparing the two excess noises obtained, and given the values of $\eta_1$ and $\eta_2$ the local contribution and the channel contribution of the excess noise can be determined. During channel parameter estimation, Alice reveals a subset of her transmitted symbols, on the authenticated channel AC (see figure 1), allowing Bob to compute statistics over his own received signal.

With discrete modulation (as is the case with 64-QAM Probabilistic Constellation Shaping modulation), Bob accesses statistics of the entire received signal, including the variance $V_B$ of the received signal.

In the described embodiment, discrete modulation is used at Alice's side, and Bob isolates individual symbols from the constellation by conditioning on the symbol sent by Alice, leading to conditional variance $V_{B|A}$, i.e. the variance of Bob's measurements conditioned on Alice's data. Then Bob removes the modulation component and isolates the noise. This additional information provides an extra equation that is then used by Bob in channel parameter estimation step Eq6 to refine the channel parameter estimation.

The acousto-optic modulator 401 is calibrated before operations and thus, in operation, the acousto-optic modulator 401 adjusts the full channel's transmittance with a known and trusted optical attenuation, $\eta_1$ for level L1 (see figure 3) or $\eta_2$ fir level L2 (again on figure 3) when two levels are used or more generally $\eta_i$, allowing two additional equations for each additional level, hereinafter forming the equation system 1, to be gained and the channel parameter estimation process to be refined In these equations, A means Alice and B means Bob.

$$V_{B,\eta_i} = N_0 \left( \frac{\eta_i T}{2} V_A + \frac{\eta_i T}{2} \xi^A_{ch} + \xi^B_{loc} + 1 \right)$$

$$V_{B|A,\eta_i} = N_0 \left( \frac{\eta_i T}{2} \xi^A_{ch} + \xi^B_{loc} + 1 \right) \tag{1}$$

In equation system (1)

- $N_0$ is the variance of the calibrated shot noise - expressed with the unit $V^2$ (square volt). $N_0$ is pre-calibrated at Bob's premises with no channel connected to the receiver setup. Hence in both equations of system 1, the variance of the noise experienced at Bob includes a term $N_0$ x 1.

- $\xi^B_{loc}$ is the local component of the noise in excess measured by Bob during transmission operation in Shot Noise Units (SNU). Hence in both equations of system 1, the variance of the noise experienced at Bob includes a term $N_0$ x $\xi^B_{loc}$ that does not depend on the attenuation factor $\eta_i$ defined by the acousto-optic modulator 401.

- T is the estimated channel transmittance, and $\frac{\eta_i T}{2} \xi^A_{ch}$ the estimated component of the noise in excess at Bob's end originated in the channel from Bob's point of view. It includes a ½ factor because the detection at Bob's end is separated in two arms, namely the I arm and the Q arm. This component is written in short in the following $\xi^B_{ch,\eta_i}$. The noise factor in this term is expressed in Shot Noise Units SNU. In both equations of system 1, the variance of the noise experienced at Bob thus includes a term $N_0$ x $\frac{\eta_i T}{2} \xi^A_{ch}$ (or $N_0$ x $\xi^B_{ch,\eta_i}$) that is proportional to the attenuation factor $\eta_i$ defined by the acousto-optic modulator 401.

- $V_A$ is the known modulation variance of the quantum signal transmitted by Alice expressed in Shot Noise Units (SNU). Hence in the first equation of system 1, the variance of the noise experienced at Bob includes a term $N_0 \eta_i T V_A / 2$ that is proportional to the attenuation factor $\eta_i$ defined by the acousto-optic modulator 401. The ½ factor accounts as previously for the presence of two detectors, one for the in phase I component and one for the in quadrature Q component.

The ratio X defined as the ratio $\eta 1/\eta 2$ is pre-calibrated. In other embodiments in which a third (or any further) transmission/attenuation level is used, such level is also calibrated with respect to one or several such level(s).

A calibration follows the following three steps: (1) Electronic noise estimation with both local oscillator and signal off, capturing the detector's inherent noise; (2) Shot noise and electronic noise estimation, with LO on and signal off, to account for quantum fluctuations; (3) Signal measurement with both LO and signal on, to calculate total noise and isolate the excess noise from the channel.

With two levels, as explained above, Bob follows this standard calibration process but switches between two attenuation levels for step (3), $\eta_1$ and $\eta_2$, which provides an additional equation to separate the receiver's local noise from channel noise, refining the excess noise estimation compared to conventional CVQKD.

In three-level, a third attenuation level, $\eta_{extinction}$, allows Bob to cut off the incoming signal while keeping the LO on, which is essentially step (2) of the general calibration process. This enables close to real-time shot noise calibration, using the same acousto-optic modulator AOM hardware as with two levels. By periodically extinguishing the signal, the calibration process is improved as the impact of shot noise drift diminishes. According to the invention, equation system (1) is used to estimate $\xi_{loc}^B$ the local component of the noise in excess measured by Bob.

This component is then distinguished from the excess noise component originating from the channel of transmittance T, $\xi_{ch}^B$.

From equation system 1, the following can be derived, i.e. this scheme enables the separate estimation of the local and transmitted components of the excess noise measured at Bob's end.

$$\xi_{loc}^B = \frac{V_{B,\eta_1} - X V_{B,\eta_2}}{N_0(1-X)} - 1$$

$$\xi_{ch,\eta_i}^B = \frac{V_{B|A,\eta_i}}{N_0} - \xi_{loc}^B - 1$$

$$(2)$$

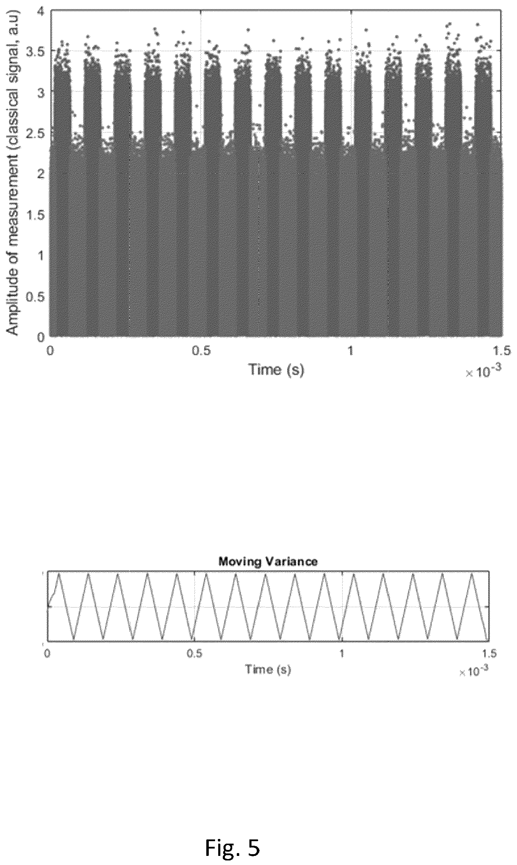

[Fig. 5] On figure 5, on the upper part of the figure, on the x-axis the time is shown from 0 et 1,5 ms, similar to the plot of the lower part of figure 3, and on the y-axis the amplitude of the measurement of the classical signal is shown in arbitrary unit a.u. from 0 to 4 a.u.. The plot shows a periodic succession of time interval with the amplitude close to 2,3 a.u., and intervals with the amplitude close to 3,4 a.u.. The period is that of the square signal of figure 3.

The lower part of the figure shows with the same x-axis, on the y-axis, the moving variance of the classical signal. The moving variance moves up and down in a saw tooth manner with the same period as the square modulating signal.

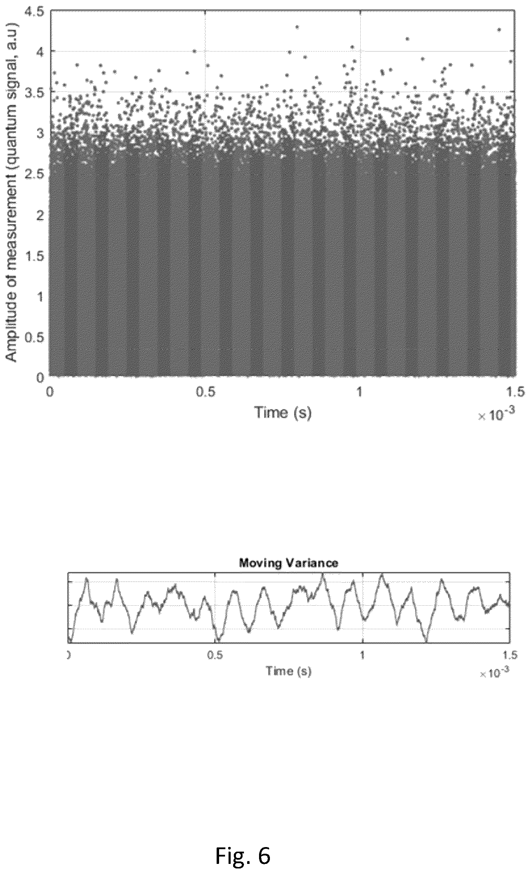

[Fig. 6] On figure 6, on the upper part of the figure, on the x-axis the time is shown from 0 et 1,5 ms, similar to the plot of the lower part of figure 3 and to the plots of figure 5, and on the y-axis the amplitude of the measurement of the quantum signal is shown in arbitrary unit from 0 to 4,5 a.u..

The lower part of the figure shows with the same x-axis, on the y-axis, the moving variance of the quantum signal. The moving variance moves up and down periodically with the same period as the square modulating signal.

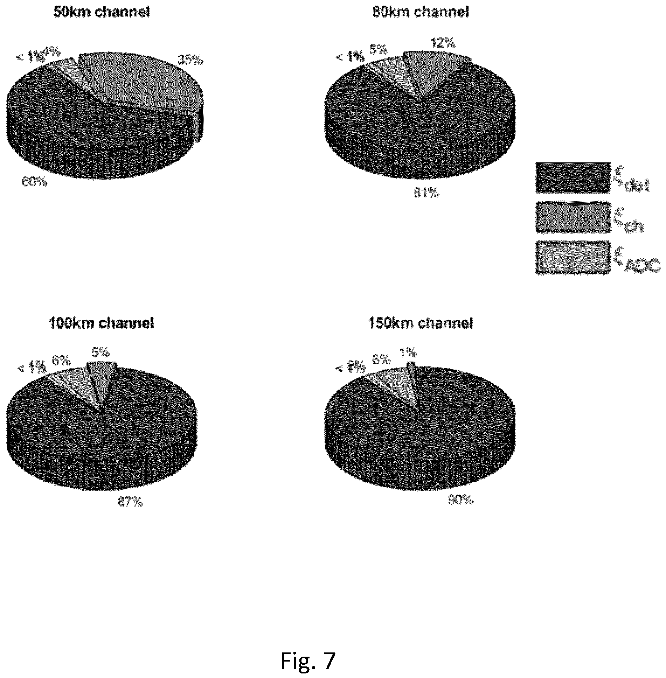

[Fig. 7] Figure 7 shows the impact of the invention on long distance operation. The main part of the excess noise is issued from the equilibrated coherent detectors. The lower the channel transmittance T, the more the local contributions, i.e. arising from the inside of the detection device, become dominant. Thus it is advantageous to totally asses this contribution.

On the upper left side part of figure 7, the estimation for a 50 km long channel are shown. 60% of the total excess noise is $\xi_{det}$ i.e. the noise of the detector, while 35% is $\xi_{ch}$ the noise of the channel. If the length of the channel increases, the part of the noise of the detector increases, up to 90% for the detector vs 1% for the channel if the channel is 150 km long.

The estimations also show a minor part of the excess noise arising from the Analog to Digital converter ADC of the receiver: as the noise of the channel diminishes with increasing distances, the relative weight of the ADC increases from 4% at 50 km to 6% at 150 km.

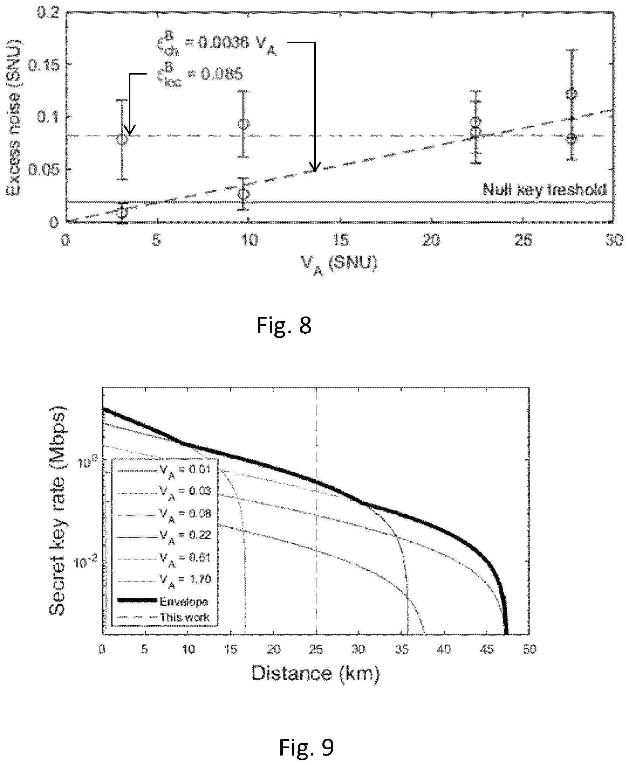

[Fig. 8] Figure 8 shows the estimates of the two excess noise components at Bob's end obtained with the invention and the above mentioned 25 km channel, and with values of $V_A$ chosen between 3 and 28 SNU. 99% confidence intervals are also shown. Linear fits in dotted lines are also shown: $\xi_{loc}^B$ is expected not to vary with $V_A$, whereas $\xi_{ch}^B$ is expected to vary proportionally to $V_A$.

On the x-axis, the $V_A$ value in SNU from 0 to 30 SNU is shown, while on the y-axis, the excess noise in SNU is shown, from 0 to 0,2 SNU.

The estimation of the local component $\xi_{loc}^B$ of the excess noise appears to be stable over several blocks, in different regimes. As expected, it does not increase with the modulation variance $V_A$. The $\xi_{loc}^B$ excess local noise component is fitted to the constant value of 0,085 SNU.

The component coming from the channel scales linearly with $V_A$. The $\xi_{ch}^B$ excess noise originating from the channel of transmittance T is fitted to 0,0036 $V_A$.

A null key threshold (for any distance) is represented in figure 8, for allowing comparison. It is about 0,02 SNU.

Under the assumption that the local component of the excess noise is trusted the following can be derived:

$$\xi_A^{trusted} = \frac{2}{\eta_1 T}(\xi_{ch,\eta_1}^B) \approx \frac{2}{\eta_1 T}(0.0036 \cdot V_A)$$

For $V_A$ lower than 5 SNU, the plot shows that a positive key rate can be expected.

[Fig. 9] In the local component of the excess noise is considered trusted, the asymptotic key rate can be positive, as depicted in Figure 9, showcasing significant improvement. To obtain these curves, the secret key rate for several values of $V_A$ (from 0,01 to 1,70 SNU) is computed. The secret key rate in Mbps is shown on the y axis, using a logarithmic scale, from approximatively $10^{-3}$ to $10^{+1}$ Mbps. The distance between the emitter and the receiver is shown on the x axis from 0 to 50 km. The secret key rate at lower distance is lower for lower values of $V_A$, while the secret key rate falls at lower distances for higher values of $V_A$. The curve for $V_A$ = 1,70 SNU is hardly visible on the figure, because it is very close to the y axis.

The upper envelope of these curves was then examined. Data, acquired at 25 km (dotted vertical line on the figure), shows a 0,37 Mbps secret key rate, while the analysis and figure 8 show that no secret key could be extracted at any distance from these data if the local component of the excess noise is not considered trusted.

By assuming the local component of the excess noise to be trusted, a significant improvement in achievable transmission distance is achieved, expanding from no secret key rate to positive key rate up to 45 km and further.

This technique is used with a Prepare and Measure CV-QKD system.

Furthermore, since the local component of the excess noise becomes dominant as distance increases, a high favourable impact on long-distance CV-QKD implementation is obtained.

The invention can be used in various industrial fields: telecommunications, cybersecurity, defence, health information management, genomics, critical infrastructures, governmental activities.

Cryptographic applications that beneficially leverage quantum coherent communications with refined excess noise calibration according to the invention include, more generally:

- Continuous Variable - Quantum Key Distribution CV-QKD, as described above
- Quantum Random Number Generation - QRNG, based on coherent detections, typically in scenario with only partially characterized hardware - such scenarios can be called "semi device independent"
- Secure Multi-party computation based on distributed computing and cryptography, for instance based on the following (quantum-based) building blocks: Oblivious Transfer, or Bit Commitment, Coin Tossing
- Secure Delegation of quantum computation, also called Blind Quantum Computing
- Secure communication protocols, leveraging quantum communications, and yet different from QKD: Quantum Secure Direct Communication, Quantum Data Locking, Hybrid quantum cryptographic protocols in the Quantum Computation Timelock (QCT) model, Secrecy coding over Quantum Wiretap channel.

**Claims**

1. Method of channel noise estimation for a continuous variable quantum communication channel, the method comprising in a receiver device (400) receiving a signal through a public transmission media (200) and processing a recovered quantum signal using channel parameter estimation (Eq6), evaluating an amount of excess noise, **characterized in that** a controlled amplitude modulation (401) is performed in the receiver device (400), to form said recovered quantum signal from the signal received through the public transmission media (200) by the receiver device (400), the method comprising evaluating, using the controlled amplitude modulation (401) a subamount of said amount of excess noise dependent from the channel (QC).

2. Method of channel noise estimation according to claim 1, **characterized in that** the continuous variable quantum communication is an optical quantum communication.

3. Method of channel noise estimation according to claim 1 or claim 2, **characterized in that** the amplitude modulation uses acousto-optic or opto-electronic effect in a modulator (401) adapted to the transmission media.

4. Method of channel noise estimation according to any of claims 1 to 3, **characterized in that** the amplitude modulation is a multilevel modulation with two amplitude levels (L1, L2) with a precalibrated ratio between the two levels or with three amplitude levels with precalibrated ratios between levels.

5. Method of channel noise estimation according to any of claims 1 to 4, **characterized in that** evaluating a subamount includes isolating symbols from a constellation by conditioning on a symbol sent by a transmitter in the channel (QC).

6. Method of channel noise estimation according to any of claims 1 to 5, **characterized in that** said processing a recovered quantum signal includes at least correcting a phase (Eq3) or a frequency (Eq2) or applying a filter (Eq4) using information obtained from a processing (Ec5, Ec6, Ec7) of a signal of higher intensity than the quantum signal and recovered in the receiver device from the transmission media in a synchronized manner.

7. Method of channel noise estimation according to claim 6, **characterized in that** the signal of higher intensity includes a pilot tone or a data communication channel and **in that** said processing a recovered quantum signal includes demultiplexing said recovered quantum signal and said signal of higher intensity using wavelength or time division (440, 445).

8. Method of channel noise estimation according to any of claims 1 to 7, **characterized in that** said processing a recovered quantum signal includes demodulating (Eq4) using a discrete modulation scheme, 16-PSK, 32-PSK, 64-PSK or 16-QAM, 32-QAM, 64-QAM, 256-QAM being used, or a Gaussian modulation being used for transmitting the quantum data.

9. Method of channel noise estimation according to any of claims 1 to 8, **characterized in that** said processing a recovered quantum signal includes demodulating a light with a dual polarization 90° hybrid demodulator (430), said demodulating a light being performed with the light from a laser (420) of the receiver device locally producing a local oscillator or with the light from a laser transmitted through the public transmission media (200).

10. Method of channel noise estimation according to any of claims 1 to 9, **characterized in that** said processing a recovered quantum signal includes measuring with at least one coherent detector (445) at least a quadrature of a light, on at least one polarization.

11. Method of channel noise estimation according to any of claims 1 to 10, **characterized in that** the quantum communication channel is used for secure communication between distant parties or to perform secure multi-party computation.

Fig. 1

Fig. 2

400

460  450  440        430  410  401        200

20 Gs/s    43 GHz

| Osc. 1 | Det. C |

Synchro

| Osc. 2 | Det. Q |

625 Ms/s   300 MHz

455   445

Dual pol
90° hyb.

**Bob**

AOM

10 KHz

Laser

420

**Modulation State**

← L2

← L1

0.5          1          1.5

Time (s)          ×10⁻³

Fig. 3

Fig. 4

Fig. 5

Fig. 6

Fig. 7

Fig. 8

Fig. 9

Europäisches
Patentamt

European
Patent Office

Office européen
des brevets

# EUROPEAN SEARCH REPORT

**Application Number**

EP 24 30 6773

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/177848 A1 (HUAWEI TECH DUESSELDORF GMBH [DE]) 10 September 2020 (2020-09-10) <br> * page 3 - page 6 * <br> * page 10 - page 31 * <br> * page 24 * <br> ----- | 1-11 | INV. <br> H04L9/08 <br> H04B10/00 |
| A | EP 4 037 248 A1 (NOKIA SOLUTIONS & NETWORKS OY [FI]) <br> 3 August 2022 (2022-08-03) <br> * paragraph [0064] - paragraph [0069] * <br> ----- | 1-11 | |
| A | WO 2014/181391 A1 (HITACHI LTD [JP]) <br> 13 November 2014 (2014-11-13) <br> * abstract * <br> ----- | 1-11 | |
| A | FABIAN LAUDENBACH ET AL: "Pilot-assisted intradyne reception for high-speed continuous-variable quantum key distribution with true local oscillator", QUANTUM, <br> vol. 3, 17 January 2019 (2019-01-17), page 193, XP055647206, <br> DOI: 10.22331/q-2019-10-07-193 <br> * page 2 - page 7 * <br> ----- | 1-11 | |
| A | WO 2023/151927 A1 (INST MINES TELECOM [FR]) 17 August 2023 (2023-08-17) <br> * paragraph [0064] - paragraph [0068] * <br> * paragraph [0095] - paragraph [0098] * <br> ----- | 1-11 | |

**TECHNICAL FIELDS SEARCHED (IPC)**

H04L
H04B

The present search report has been drawn up for all claims

| Place of search | Date of completion of the search | Examiner |
|---|---|---|
| Munich | 21 March 2025 | Apostolescu, Radu |

EPO FORM 1503 03.82 (P04C01)

## ANNEX TO THE EUROPEAN SEARCH REPORT
## ON EUROPEAN PATENT APPLICATION NO.

EP 24 30 6773

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2025

| Patent document cited in search report | | Publication date | Patent family member(s) | | Publication date |
|---|---|---|---|---|---|
| WO 2020177848 | A1 | 10-09-2020 | CN | 113302875 A | 24-08-2021 |
| | | | WO | 2020177848 A1 | 10-09-2020 |
| EP 4037248 | A1 | 03-08-2022 | NONE | | |
| WO 2014181391 | A1 | 13-11-2014 | NONE | | |
| WO 2023151927 | A1 | 17-08-2023 | CN | 118648254 A | 13-09-2024 |
| | | | EP | 4228174 A1 | 16-08-2023 |
| | | | WO | 2023151927 A1 | 17-08-2023 |

EPO FORM P0459

For more details about this annex : see Official Journal of the European Patent Office, No. 12/82

**EP 4 734 435 A1**

**REFERENCES CITED IN THE DESCRIPTION**

**Patent documents cited in the description**

- WO 2023151927 A1

**Non-patent literature cited in the description**

- **SOH et al.** Self-Referenced Continuous-Variable Quantum Key Distribution Protocol. *Phys. Rev.*, 2015, vol. X 5, 041010
- **MARIE**. *Alléaume*, 2017
- *Phys. Rev.*, vol. A 95, 012316
- **LAUDENBACH et al.** Pilot-assisted intradyne reception for high-speed continuous-variable quantum key distribution with true local oscillator. *Quantum*, 2019, vol. 3, 193
- **AYMERIC et al.** Symbiotic joint operation of quantum and classical coherent communications. *Optical Fiber Communication Conference (OFC)*, 2022

- Quantum key distribution and classical communication coherent deployment with shared hardware and joint digital signal processing. **AYMERIC et al.** Proceedings. Quantum Technologies, 2022, vol. 12133
- **HAJOMER et al.** *Sci. Adv.*, 2024, vol. 10
- **ROUMESTAN et al.** *European Conference on Optical Communication (ECOC)*, 2021, 1-4
- **LI et al.** *Photonics Research*, 2023, vol. 11 (4)
- **BRUNNER et al.** Precise Noise Calibration for CV-QKD. *22nd International Conference on Transparent Optical Networks*, July 2020, ISSN 2161-2064, 1-4
- **LUCAMARINI et al.** Implementation security of quantum cryptography introduction, challenges, solutions. *ETSI white paper*, 2018